**Europäisches Patentamt**

**European Patent Office**

**Office européen des brevets**

(19)

(11) Veröffentlichungsnummer: **0 468 608 A1**

# EUROPÄISCHE PATENTANMELDUNG

(12)

(21) Anmeldenummer: **91250202.8**

(22) Anmeldetag: **19.07.91**

(51) Int. Cl.5: **B01D 39/14**

(30) Priorität: **19.06.91 DE 4120189**
      **24.07.90 DD 343011**

(43) Veröffentlichungstag der Anmeldung:
     **29.01.92 Patentblatt 92/05**

(84) Benannte Vertragsstaaten:
     **AT BE CH DE DK ES FR GB GR IT LI LU NL SE**

(71) Anmelder: **LAUSITZER BRAUNKOHLE AG**
     **Knappenstrasse 1**
     **O-7840 Senftenberg/Buchwalde(DE)**

(72) Erfinder: **Tost, Reinhard**
     **Heinrich-Rau-Strasse 28**
     **O-7500 Cottbus(DE)**
     Erfinder: **Domke, Konrad**
     **Albert-Schweitzer-Strasse 18**
     **O-7840 Senftenberg(DE)**

(54) **Entwässerungselement für den Brunnenausbau und Verfahren zu seiner Herstellung.**

(57) Die Erfindung kann im Bergbau, in der Wasserwirtschaft sowie der Umwelttechnik für den Ausbau von Wasserhaltungsanlagen, insbesondere von Brunnen, eingesetzt werden. Als Brunnenausbaumaterial verfügt das erfindungsgemäße Entwässerungselement über die notwendigen technischen Festigkeitsparameter als auch über optimale hydraulische Eigenschaften.

Dies wird dadurch erreicht, daß das Entwässerungselement aus einem Materialgemisch besteht, das sich aus 20 ... 30 Masseteilen eines definierten Zuschlagstoffes und 1 Masseteil eines Bindemittels, vorzugsweise auf der Basis Polyurethan, zusammensetzt.

EP 0 468 608 A1

Die Einsatzgebiete des erfindungsgemäßen Entwässerungselementes sind der Bergbau, die Wasserwirtschaft und die Umwelttechnik. Im Bergbau kommen für tiefe Entwässerungsbrunnen Filter in den wasserführenden Schichten zum Einsatz, die die Aufgabe haben, die hydraulische Funktionsfähigkeit des Brunnens zu gewährleisten. Diese Filter müssen sowohl über entsprechende technische Festigkeitsparameter als auch als Entwässerungselement über optimale hydraulische Eigenschaften verfügen. Hieraus abgeleitet sind vielfältige Ausführungsformen von Filtern mit zweischichtigem Wandaufbau bekannt. Als Stützkörper werden geschlitzte oder perforierte Stahl- oder Plastrohre in unterschiedlichsten Varianten eingesetzt. Sie sollen die statische Stabilität der Filtersäule im ausgebauten Brunnen gewährleisten und sind gleichzeitig Trägerelement für eine Mantelschicht. Das Material der Mantelschicht soll gut wasserdurchlässig sein und gleichzeitig einen hohen Filtereffekt garantieren. Aufgesetzte Kiespackungen sind dafür als Vorzugsvariante bekannt.

Nachteile dieser Art von Brunnenfilter sind die aufwendige Herstellung und die zu geringe Durchlaßfähigkeit des Stützkörpers bzw. die ungenügenden Festigkeitswerte des Filters beim Einbau, wenn zugunsten des Wasserdurchsatzes der Anteil der Öffnungen im Stützkörper vergrößert wird.

Alternativ dazu wurden deshalb Filter aus Beton oder ähnlichen Baustoffen mit einschichtigem Wandaufbau entwickelt.

Ihr Einsatz als Entwässerungselement setzte sich jedoch nicht durch. Zum einen ist ihr Einbau in größeren Teufen festigkeitsmäßig kaum möglich, zum anderen wird der geforderte Filtereffekt durch das eingesetzte Material nicht erreicht.

Im Rahmen des Umweltschutzes steht nun in immer stärkerem Maße die Forderung, umweltverträgliches Ausbaumaterial zum Einsatz zu bringen. Es soll gleichzeitig überbaggerungsfähig sein, um auch speziell für die Entwässerung im Braunkohlebergbau geeignet zu sein und einen gleichwertigen Filtereffekt im Vergleich zu bekannten Ausbaumaterialien aufweisen.

Erfindungsgemäß wird diese Aufgabe durch ein Entwässerungselement gelöst, das aus einem homogenen Gemisch besteht, das sich aus ausgewählten Zuschlagstoffen und einem Bindemittel zusammensetzt. Dabei muß das Bindemittel gut härtbar sein und die einzelnen Kornteile zu einem porösen Material verbinden. Die Wasserdurchlässigkeit und der Reinigungsgrad des zulaufenden Wassers werden durch die entstandene Gefügestruktur bestimmt. Diese baut sich nach der Körnung des ausgewählten Zuschlagstoffes auf. Die Dosierung des Bindemittels muß so erfolgen, daß im Herstellungsverfahren die trockenen Kornteile nur benetzt werden. Die entstehenden Hohlräume im Materialgefüge dürfen durch das Bindemittel nicht zugesetzt werden.

Um sowohl die notwendigen mechanischen Festigkeitswerte als auch den gewünschten Filtereffekt des zulaufenden Wassers zu erhalten, ist ein Massenverhältnis von 30 ... 20:1 zwischen Zuschlagstoff und Bindemittel einzuhalten. Als Bindemittel wird ein Reaktionsharz, vorzugsweise auf der Basis von Polyurethan, verwendet, dem ein Härter und ein Katalysator beigegeben werden. Nach dem intensiven Mischen der einzelnen Bestandteile wird die Masse zum Aushärten in eine vorbereitete, dem Fachmann bekannte Form gefüllt und zur Ausfüllung der Hohlräume bzw. zwecks Verdichtung der Masse gerüttelt. Das Aushärten kann unter Zufuhr von Wärme im Temperaturbereich von etwa 80 °C erfolgen.

Ausführungsbeispiel

Eine Variante des erfindungsgemäßen Entwässerungselementes soll nachstehend näher beschrieben werden.

Es besteht aus einem Kies-Bindemittel-Gemisch folgender Zusammenstellung:

| | |
|---|---|
| 25 Masseteile | getrockneter Filterkies mit einer Körnung von 1 ... 4 mm |
| 1 Masseteil | Reaktionsharz auf der Basis Polyurethan |

Im Herstellungsverfahren werden diese beiden Komponenten unter Zugabe eines Härters sowie eines Katalysators als Reaktionsmittel intensiv vermischt. Dabei müssen die einzelnen Kieskörner vollkommen mit dem Bindemittel benetzt werden.

Nach dem Mischen wird die Masse in eine vorbereitete Form gefüllt, zur Ausfüllung der Hohlräume gerüttelt und unter Einwirkung von Wärme im Temperaturbereich von ca. 80 °C ausgehärtet. Katalysator und Wärme wirken als Verfahrensbeschleuniger.

Mit diesem Entwässerungselement wird ein naturnaher Ausgangsstoff im Brunnenausbau eingesetzt. Sein Filtereffekt und die mechanischen Festigkeitswerte ergeben sich aus den Korngrößen einschließlich dem Unterkornanteil sowie dem Bindemitteleinsatz.

**Patentansprüche**

1. Entwässerungselement für den Braunnenausbau mit ringförmigem Aufbau,
gekennzeichnet dadurch,
daß das Entwässerungselement aus einem Materialgemisch besteht, das sich aus 20 ... 30 Masseteilen eines definierten Zuschlagstoffes und 1 Masseteil eines Bindemittels zusammensetzt.

2.  Entwässerungselement nach Anspruch 1,
    gekennzeichnet dadurch,
    daß als Zuschlagstoffe Filterkiese im Fraktionsbereich von vorzugsweise 1 ... 4 mm eingesetzt werden.

3.  Entwässerungselement nach Anspruch 1,
    gekennzeichnet dadurch,
    daß ein Bindemittel auf der Basis Polyurethan
    eingesetzt wird.

4.  Entwässerungselement nach Anspruch 1 und
    2,
    gekennzeichnet dadurch,
    daß den Kiesen im Mengenaustausch Leichtzuschlagstoffe beigemengt werden können.

5.  Verfahren zur Herstellung eines Entwässerungselementes für den Brunnenausbau,
    gekennzeichnet dadurch,
    daß vorbehandelte Zuschlagstoffe mit einem
    Reaktionsharz im Masseverhältnis 20:1 bis
    30:1 unter Zugabe eines Härters und Katalysators vermischt werden und die entstandene
    Masse in einer üblichen Form aushärtet, wobei
    Wärme zugeführt werden kann.

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 923 301  (M. NKOY)<br>* Insbesonderes Spalte 1, Zeilen 11-12 *<br>– – – | 1-3 | B 01 D 39/14 |
| A | WO-A-8 903 926  (THE PATENT CO.)<br>– – – | | |
| A | CH-A-295 037  (W. DEGEN)<br>– – – | | |
| A | DE-A-832 873  (A. BENZ)<br>– – – – – | | |

| RECHERCHIERTE SACHGEBIETE (Int. Cl.5) |
|---|
| B 01 D 39/00 |

Der vorliegende Recherchenbericht wurde für alle Patentansprüche erstellt

| Recherchenort | Abschlußdatum der Recherche | Prüfer |
|---|---|---|
| Den Haag | 16 Oktober 91 | DEVISME F.R. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
-------------------------------------------------------------
& : Mitglied der gleichen Patentfamilie, übereinstimmendes Dokument